# EUROPEAN PATENT SPECIFICATION

(11) **EP 0 647 482 B1**
(45) Date of publication and mention of the grant of the patent: **04.11.1998**
(21) Application number: 94600004.9
(22) Date of filing: 11.05.1994
(51) Int. Cl.: B09B 3/00, B30B 9/30

(54) **Method for the treatment of solid waste by compression and packaging ("Press" Method)**
Verfahren zur Bearbeitung von festen Abfällen durch Kompaktierung und Verpacken
Procédé de traitment de déchets solides par compression et emballage

(30) Priority: 20.05.1993 GR 93010203
(43) Date of publication of application: 12.04.1995
(73) Proprietor: Karagounis, Moschos, GR-116 35 Athens (GR)
(72) Inventor: Karagounis, Moschos, GR-116 35 Athens (GR)

(56) References cited:
- EP-A- 0 373 460
- WO-A-92/18261
- CH-A- 507 804
- FR-A- 2 650 202
- GB-A- 1 159 731
- GB-A- 1 159 732
- GB-A- 2 032 842

## Description

This invention, which for brevity's sake is only referred to by the name of "PRESS", relates to the process of Municipal Solid Waste Management and covers all related activities, i.e. the collection of waste by the collection vehicles of the Municipality, the transportation to and the landfilling in the specially designed Areas for Sanitary Landfilling of Waste (ASLW), and the collection and the exploitation of the biogass produced in the ASLWs. All materials which will be recycled must be separated on-site, otherwise they will be treated according to the principles of the "PRESS" method. This is a prerequisite for the application of the method.

At present, solid waste materials are treated in a variety of methods:
**By Combustion:** This is a straightforward and inexpensive solution, which leads to the loss of valuable raw materials and to significant environmental load. Also, the danger of spread of fire when this method is applied is always imminent.
**By conventional and sanitary landfilling:.** This method requires large areas of land and significant capital expenditure for infrastructure work, especially for the protection of the underground water streams (the protection of which is often, as in the case of Greece, of paramount importance.)
**By recycling:** In practical terms, only few materials are recyclable. The non recyclable materials (accounting for almost half of the waste material produced) must be treated in other methods. Recycling practices also face significant related with the collection and the separation of the raw materials and the distribution and marketing of the products of recycling.
**Partial compression and landfilling (Baling System):** A prerequisite of the application of this method is the separation of recyclable material on-site. This is a practical and efficient method. However, the danger of pollution of underground water is always imminent. Another issue of major concern is the exploitation of the biogas generated, which, should it be left uncontrolled, may lead to dangerous situations.
**By Super-Compression:** This method is not fully evaluated yet. In this method, waste are being pressed and peletised. The resulting compressed waste pellets can be used in the bedding layers of various constructions works. Naturally, the application of this method excludes the possibility of exploitation of the energy content of waste material. Another drawback is that it is not always possible to trace the locations where such pellets will be used. Thus, it is possible that, should they contain toxic waste, they will continue to pollute the soil, and subsequently the underground water.
**Other methods**, such as recycling with biogass generation, conversion to fertilizers, etc. All these methods have some advantages and some drawbacks. For example, as the composition of waste material is neither accurately known, nor constant, the effect of the fertilizers produced by the above method on plant growth cannot be easily predicted.

The current situation concerning Waste treatment in Greece is as follows:

### Waste Treatment in large urban agglomerations.

The process of waste collection requires a tremendous effort. Particular emphasis is given to the following conditions:
― On-site selection of recyclable materials (paper, glass, aluminum, etc.) and storage of such materials in tailor made containers, where from they are collected for further processing.
   However, recycling units have not been installed yet. Even the municipality of Piraeus, the leader organisation in recycling of municipal solid waste, has not completed the installation of their recycling units. This is a severe problem, as this is the only part of the whole recycling process that generates income. Thus, in the absence of recycling units, the process of Solid Waste recycling is still a loss-making operation.
― Storage of non - recyclable material in large covered containers which can be easily emptied mechanically with the use of equipment fitted to the waste collection vehicles. These containers are cleaned and washed at regular time intervals.
― Creation of "Waste Transfer Stations", (WTS) where waste materials are compressed and loaded in large Container vehicles for delivery to the ASLW.
   The container vehicles are equipped with a tank where the liquid settling during the transportation is collected.

### Waste Treatment in rural areas and the islands

In general, waste materials are collected by the appropriate waste collection vehicles of the municipalities. They are transported to the landfills where they are burned. A lot of fires have started from uncontrolled combustion of waste material in landfills. Furthermore, environmental load due to the generation of the combustion gases is also significant. Following combustion, the residue is usually buried in an unsystematic manner which has nothing to do with sanitary landfilling), thus resulting in the non - reversible contamination of the soil, the atmosphere and the underground water streams. From all the above, it can be concluded that the unsystematic treatment of solid waste in rural areas results in environmental pollution, pauses dangers to the public health and results in a downgrade of the Quality of Life.

Various publications disclose aspects of waste treatment involving the packaging and storage of it in landfills.

CH-A-507.804 and GB-A-2,032,842 are concerned with the compaction of waste into blocks. GB-A-1,159,731 and 1,159,732 and MÜLL UND ABFALL, no. 9/81, pages 253-259; H. ORTH: "Mullballendeponie in Düsseldorf - über ein Jahr in Betrieb" disclose packaging of waste and stacking in landfills.

WO92/18261 describes a system of stacking blocks of waste in a landfill and the production of bio-gas from it.

The instant invention improves on these known techniques by applying the features of the independent claims 1 and 6. The particularly effective feature is the insertion of perforated pipes in the waste bales to facilitate the migration of gas and leachate.

### Main Disadvantages related to the current system of Waste Management

― Even in the cases where the transfer operation is applied, the cost of waste collection, transfer, transportation and landfilling is very high.
― Very large areas are required for landfilling and for covering the deposited waste material. This also applies to the cases where sanitary landfilling of waste material is performed as described in legislation passed in 1992.
― Significant capital expenditure is required for infrastructure work in the ASLWs in order to avoid contamination of underground water and for building installations for the collection of the biogas generated.
― The danger of landslip or of uncontrolled biogas escape in the ASLWs is imminent.
― Inappropriate working conditions prevail during operations performed outdoors (such as unloading, spreading and covering of waste). This situation is most severe when the work is performed under high temperatures or under rain.
― Waste material reaching the ASLWs are usually in a state of decomposition. Thus, they have to be immediately layered and covered with soil, in order to avoid the risk of waste scattering and the subsequent heavy environmental damage.
― The heavy Container vehicles have to travel along rough paths, in dirt roads covered by waste, dust or mud. Thus, they often break down.
― In rural areas (small town and villages) the situation is still worse. Waste deposited in landfills are often carried around the place by dogs and seagulls. Similarly, ugly images of waste material floating in harbors and beaches are often encountered in some islands.
― Finally, a lot of wildfires have originated from uncontrolled combustion in the landfills.

### From all the above, it can be concluded that:

― With the exception of a pilot installation in Ano Liosia, the areas for the installation of the Sanitary Landfills and the recycling units have not been selected yet, due to the anticipated reactions of the inhabitants of nearby areas. The experiences from the operation of the landfills and the ASLW already installed in Ano Liosia contribute significantly to the increasing anxiety of the population.
― Given the fact that the Sxistos landfill is closed, whereas the Ano Liosia ASLW has a working life of only a few months, it is feared that the process of area selection and the installation of the new ASLWs will have to be completed in a very short time and under the pressure of the lack of space for depositing waste material generated on a daily basis. This lack of time for planning and installation of the ASLWs, may lead to the choice of operating the landfills in the conventional method rather than applying Sanitary Landfilling practices, as originally planned. Such a situation is undesirable as the irreversible process of pollution of the environment and of the underground water streams will continue.
― At present, municipalities operate independently of each other. This is due to the lack of Planning at National Level. Unless this situation is corrected, it is not possible to solve the problem of Waste Management efficiently and on time.

The **"PRESS" Method** refers to the Management of Waste, following the selection and separation of recyclable materials. It proposes modifications and enhancements and it solves problems related to the following operations (stages) of the Waste Management process:

Concerning the **Collection Stage** it must be stressed that the method sets on site separation of recyclable material as a pre-requisite. The method cannot distinguish between different materials and it is applied to the whole mass presented for treatment.

In the **Waste Transfer Stage**, extensive compression (in a ratio of 7-9 : 1) is performed in a compression unit consisting of two or three presses operating in line. Processed material is delivered in rectangular blocks of dimensions 1.0 x 0.5 x 0.5 meters. They are packaged in special reinforced cartons which offer protection from moisture and can be easily lifted by cranes. During the packaging process it is possible to insert two perforated metallic tubes in the blocks. These tubes offer:
easier transportation of the blocks,
the option to standardize the process of stacking of the boxes
the option to install a piping network for the outflow of liquids percolating through waste (leachate) or for the controlled escape of biogas. The installation of such a network gives the opportunity to control and increase the rate of biogas generation by using a catalyst.

**In the Transportation from the WTS to the ASLW:** The transportation of the blocks of waste from the WTS to the ASLW is significantly easier as the blocks have a small volume and a high specific weight This is due to the extreme pressure applied in the compression stage, where almost all the moisture and the oxidation air present in the waste material are removed. Transportation does not necessarily have to be performed by the heavy container vehicle, as normal trucks with a platform size of 6 x 2.5 meters and a height of 1.5 meters are perfectly suitable for the job. Such trucks may carry up to 30 tones of material in a cost effective manner.
When the "PRESS" method is applied, packaged waste material can be also hauled along long distances by rail or shipped. Thus, the solution is practical for installations in remote locations in the mainland or in the islands, as the easy transportation of packaged waste material will eliminate all problems related to environmental pollution, aesthetic annoyance and bad smell.

**In the Stage of Sanitary Landfilling:** The standardised and tight packaging permits easy handling of the blocks which can be conveniently and cost effectively stacked in a cell arrangement of appropriate dimensions. Thus, spreading of waste is avoided. Also, as waste material cannot be carried away by the wind, environmental damage is limited and working conditions improved. The high degree of compression limits the possibility of landslips and the dripping of the leachates caused by the penetration of rainwater through the layers of waste material. Thus, underground water streams are efficiently and cost effectively protected from contamination by toxic substances.

**In the stage of Biogas Generation and Exploitation:** The standardised packaging and the presence of the two tubes inserted in each block permit an ideal stacking (in the manner of building) in cell arrangements of the desired volume. It also permits the installation of piping networks with flexible tubes (e.g. like those manufactured in Greece by the Petzetakis Company) which will be used for the outflow of the biogas generated. The rate of biogas generation can be increased with the use of a catalyst. This catalyst can be either inserted into the block during the packaging stage, or it can be supplied into the cell structure in liquid or gaseous form via the biogas outflow piping network, by reversing the direction of the flow and by controlling the pressure differences across the network.

### Advantages of the "PRESS" method

The following constitute significant advantages obtained by the application of the "PRESS" Method in Solid Waste Management:
― Waste material can be neutralised within a small period of time (hours) after their collection.
― Significant savings are achieved in the transportation of the waste material, as the Waste Transfer Stations are not necessary. Furthermore, transportation of the material between the "PRESS" treatment units and to the ASLWs by conventional trucks is possible, as the volume transported will be half that transported by the container vehicles when conventional methods are applied.
― Significant cost savings are expected in the stage of Sanitary Landfilling, in the process of biogas generation and in the abatement of pollution generated by the leakage of leachates to the soil.
― The service time of the ASLWs can be doubled, as when conventional methods are applied, large quantities of soil (which occupy a lot of useful volume in the landfill) are required for covering the waste materials (which when unloaded from the container vehicles, they expand).
― The biogas generated can be collected in a systematic and controlled manner.
― The environment of the ASLW is protected from the uncontrolled spread of waste material, problems related to bad smell are avoided, while waste material can be left unhandled for some time, without all the usual related risks of environmental pollution.
― Working conditions for personnel in the Processing and Packaging units (where intensive ventilation and air conditioning systems are operative) are significantly ameliorated. Similarly, enhanced working conditions in the transportation and sanitary landfilling stages are also achieved.
― The process of sanitary landfilling is performed in a way that offers an absolute protection of the environment (and in particular of the underground water streams) and of the health of personnel involved in this process.
― Long distance haulage of packaged waste material by rail or ship is possible. This permits the optimum location of the ASLWs and facilitates planning for Waste Management for large geographical areas.
― Waste Management problems encountered in small islands can be solved by the operation of Compression units (operating with the Baling System) and the transportation of the blocks of waste material by ship to the nearest ASLW, where a "PRESS" unit will be installed.

The following drawings are attached, organised as appendices to the above description:
- Appendix A:: Sectional View of a Waste Compression Unit operating in three stages.
- Appendix B:: Graph of the Compression Ratio plotted against Pressure. This graph indicates the pressure required (expressed in tones per square meter) for obtaining the desired compression ratio (ratio between 1:1 and 14:1).
The graph refers to domestic municipal waste with a mean density ρ = 150 kg/m³.
- Appendix C:: Typical Arrangement of the ground level of the "PRESS" Waste Transfer Unit.
- Appendix D:: Typical Arrangement of the underground level of the "PRESS" Waste Transfer Unit.
- Appendix E:: Cross sectional view of the underground and ground levels of a "PRESS" Waste Transfer Unit.
- Appendix F:: Various details of technical construction aspects.

### Detailed Description of the "PRESS" Method.

The continuous operation of the Processing Unit is achieved by the installation of two feed stock hoppers placed next to each other along their longitudinal axis. Waste material can be simultaneously supplied to the hoppers from four trucks operating from both sides of each of the hoppers on the ground floor of the unit. The unit has an average daily capacity of 500 tonnes of waste material per each 7¹/₂ hours shift, assuming continuous operation of the unit.

For the sake of continuous and uninterrupted operation of the unit, two independent Compression and Packaging Units are located at different sides of the Unit. Compressed waste material is loaded to the trucks on a ramp located on the underground floor of the Unit, or, alternatively, on the auxiliary ramp in the ground floor. Bridge cranes or loaders (of the CLARK type) are used for loading the packaged waste material.

Two weigh-bridges are located in the ground and the underground floor, respectively, for weighing the incoming and outgoing vehicles transporting the packaged waste. Should one part of the unit be shut down because of breakdown or for maintenance reasons, the contents of the respective hopper can be transferred to the other hopper with the use of the crane bridge located over them.

In such a case overtime work or a second shift will be necessary for maintaining the processing capacity of the unit.

### Operational Procedure:

― Trucks carrying collected waste material should arrive at the unit according to a predefined schedule and served on a first come - first served basis. After being weighed on the weigh - bridge, unloading of the transported material begins. Four trucks can be unloaded at the same time. Operation control is performed by remotely operated traffic lights.
― At the bottom of each hopper (see Appendix A) a horizontal screw feeder "PRESS" is located. This device drives the waste material, via a horizontal rectangular duct, into the chamber of the respective vertical hydraulic "PRESS" (VHP2). The pressure exerted by the feeder is regulated so as to achieve a feed stock density ρ₁ = ^{∼}350 kg/m³.
   Following that, the piston of the VPH2 is lowered in order to cut a cube of waste material. Further pressure exerted by the piston results in a compression of the cube until it shrinks to about half its original height. Thus, a density ρ₂ = ^{∼}700 kg/m³ is achieved. This procedure is completed by the displacement of the piston of the HHP3 which compresses the block of waste until it is again reduced to half its original size. Thus, a final mean density ρ₃ = ^{∼}1.400 kg/m³ is achieved. The necessary support is provided by the side of the piston of the horizontal (or vertical according to the design and the packaging specifications) hydraulic stopper (HHS4). This piston is then displaced in order to accommodate the product of the HHP3 (when the latter resumes its compression action) and to drive it out of the Compression Unit and towards the Packaging Unit. When the piston of the HHS4 is lowered, the exit of the HHP3 is blocked.
   For example, if the pre compression chamber at the exit point of the Horizontal Screw Feeder "PRESS" has a square cross section of dimensions 1.0 m x 1.0 m and is 2 meters long, and if the piston of the VHP2 also has a square cross section of dimensions 1.0 m x 1.0 m, then, when lowered, the piston cuts a cube of waste 1.0 m x 1.0 m x 1.0 m, which is then compressed into a rectangular shape of dimensions 1.0 m x 1.0 m x 0.5 m.
   When the piston of the VHP2 is lowered, the piston of the HHP3 is displaced, compressing the above block into a rectangular shape of dimensions 1.0 m x 0.5 m x 0.5 m. These are the final dimensions of the compressed block which is then ready for packaging.

**Consequently**, if 450 tonnes of waste material were to be processed in 7,5 hours of continuous operation, the rate of waste processing should be 450:7,5 = 60 tones/hour or 1 ton/minute. Given that the final density is p = 1400 kg/m³, the volume of compressed waste produced daily would be 1:1.4 = ^{∼}0.71 m³/min. This corresponds to about 3 blocks per minute (of dimensions 1.0 m x 0.5 m x 0.5 m giving a volume of 0.250 m³) of an average weight of 1400:4 = 350 kg each.

This rate of waste processing is satisfactory for the Compression and the Packaging Unit. In practice the weight of the blocks is smaller than this theoretical value of 350 kg as the moisture content of the waste material has not been taken into account in the calculation.

The collection hoppers and the compression chambers are fitted with openings for the outflow of the leachates. This liquid is passed to the drains and then to the central biological treatment units, or to a local Biological Treatment Unit in the WTS.

The pressure that must be exerted at the various stages of the Compression process for achieving the desired density of waste material (and consequently the desired compression ratios) are indicated in the diagram of Appendix 2. These pressures refer to domestic solid waste of a mean density ρ = 150 kg/m³.

The following principles apply to the Packaging Process:
― For the sake of economy, all packaging materials should be produced from recyclable materials.
― A special reinforced sheet metal is used as a base for the cartons which should be soaked in tar or coated with reinforced plastic. Thus, the blocks can be suspended, transported and stacked safely and they are protected from moisture.
― The empty cartons are positioned at the exit of the compression unit. The compressed waste material is forced into the carton boxes with the assistance of an appropriate reinforcing mechanism which does not permit the expansion of the carton box. Then, the lids of the cartons are closed and tightened and the whole package is tied up with metallic or elastic tape of suitable strength.
― Following sealing of the carton boxes, two perforated metallic tubes are inserted into the boxes through appropriate openings machined on the surface of the metallic base. The tubes should be about 5 cm longer than the height of the boxes. When the tubes (inserted from the bottom of the boxes) break through the top side of the boxes, they are locked in place with a metal sheet. It will be necessary to assist the breakthrough of the tubes by pinching small holes on the top surface of the boxes with a sharp bar.
― These two tubes are useful for hanging the boxes or for stacking them in a cell structure of the desirable dimensions.
― They are also useful for the installation of a piping network for the escape of the leachates or for the collection of the biogas generated at subsequent stages.
― The Packaging details are illustrated in Appendix F.
― Extensive aeration and the appropriate air conditioning mechanisms should be installed at the underground level of the Unit. At the end of each shift, the installations should be cleaned with warm water and washed with a detergent solution.
― The packaged boxes are placed in appropriate palettes which can hold 4 or 6 boxes. They are then loaded onto the truck platforms with a bridge crane or with lifting vehicles of a laden weight of 30 tones. They are weighed during the loading process and they are transported to the ASLW. There, with the use of a mobile crane they are unloaded either directly to the sanitary landfilling area, or in special ramps where they are temporarily stored. Due to their packaging, they can be stored for short periods of time. The empty palettes are returned to the WTS.

**GENERAL NOTE:** Should grinding of the waste material be necessary, the propeller of the screw feeder can be fitted with appropriate grinding grooves.

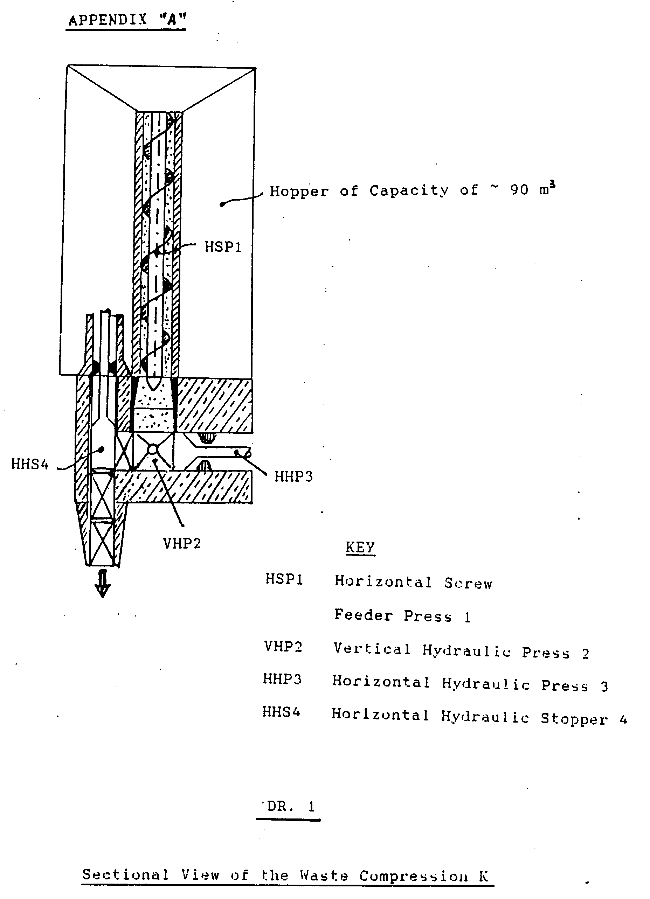

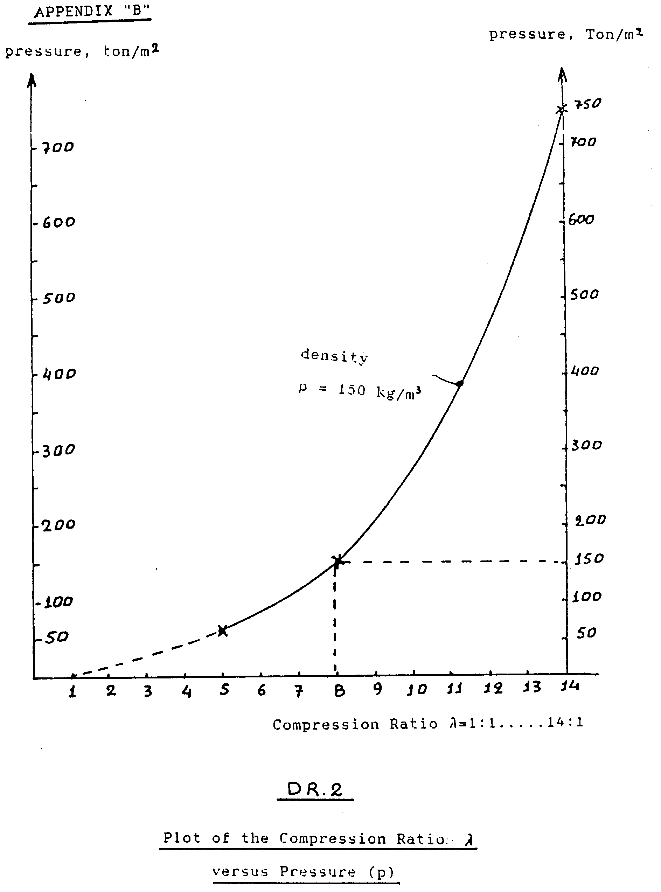

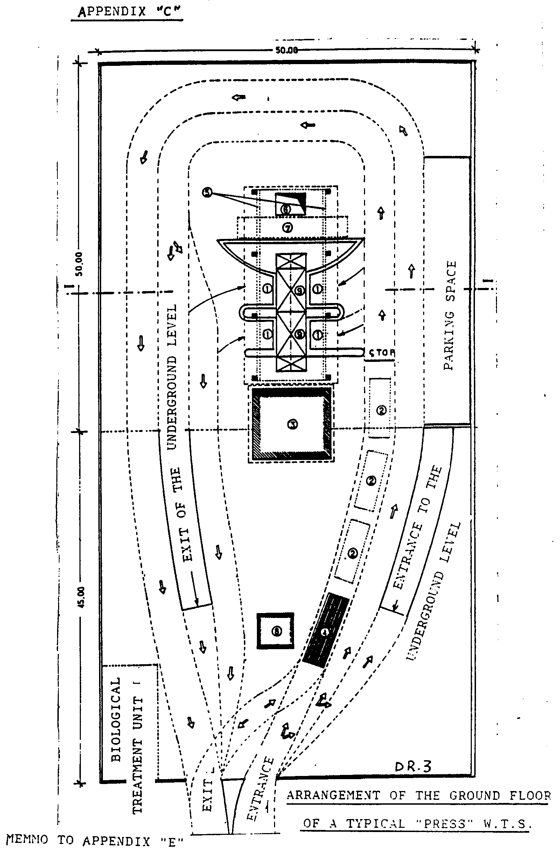

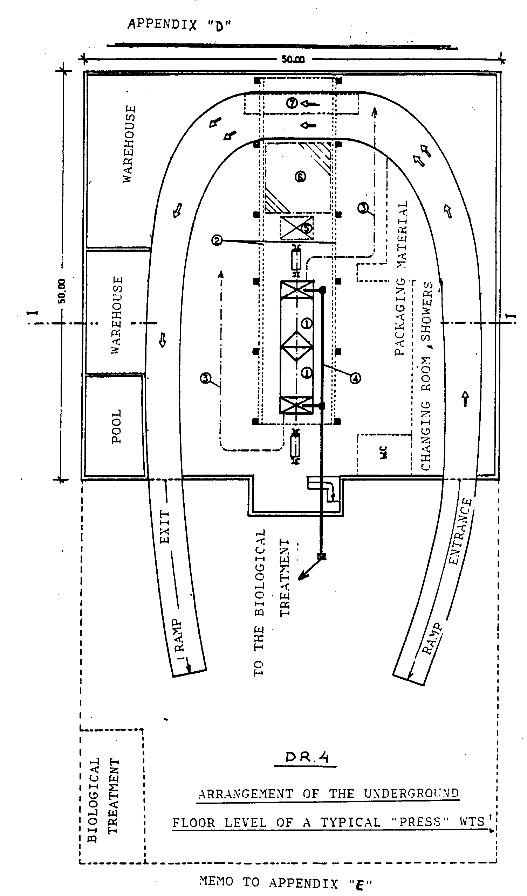

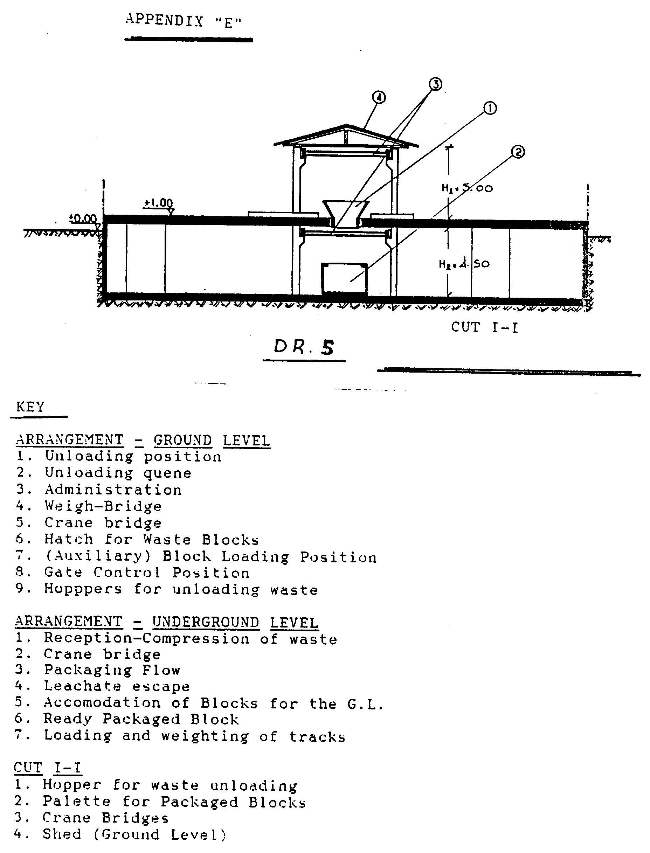

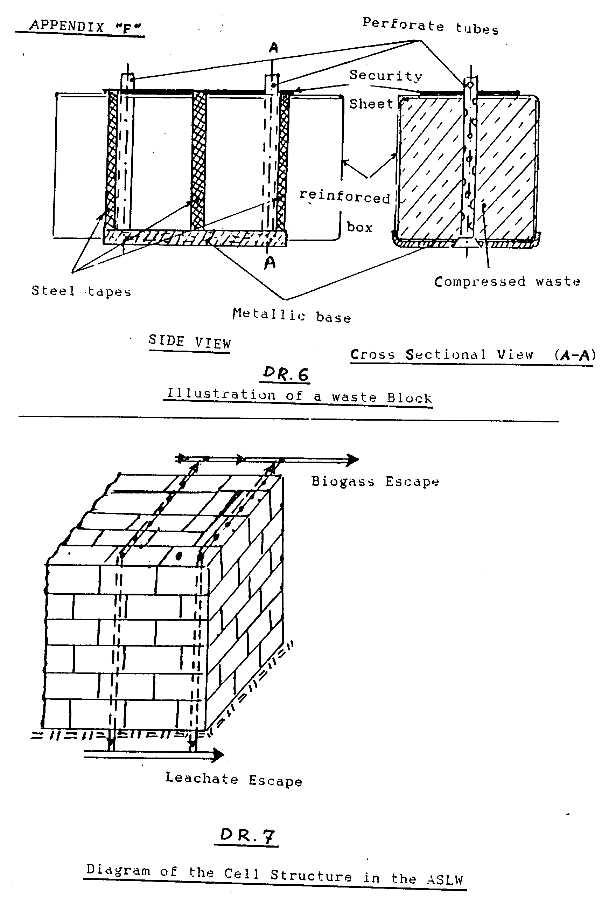

## Claims

1. A method for the disposal of municipal waste providing for volume reduction by compaction into appropriate blocks which are stacked in sanitary landfills, the method allowing percolation of leachate through the waste material in the landfill and being characterised in that,
- the blocks are packaged after compaction and
- perforated tubes are inserted in the packaged blocks in order to provide escape channels for escaping biogas and leachate.

2. The method of claim 1 characterised in that the compaction reduces the volume of waste at a ratio of from 7:1 to 9:1 by compressing it in several stages.

3. The method of claims 1 or 2 characterised in that recyclable material is sorted out on-site, prior to the compacting.

4. The method of any of the preceding claims characterised in that a first precompacting stage is effected by a screw conveyor and two compacting stages in hydraulic piston presses follow to produce rectangular blocks, preferably of dimensions of 1.0 m x 0.5 m x 0.5 m with a density of 1400 kg/m³.

5. The method of any of the preceding claims characterised in that the biogas is drawn off from the landfill through a piping network that is installed around the cell structure created by the stacked waste blocks.

6. Apparatus for the production of bales of municipal waste, comprising multiple stage compaction means (HSP1, VHP2, HHP3,), characterised by means for providing small holes through the packaging cover of the bales for the insertion of perforated tubes.

7. Apparatus according to claim 6 further characterised by a precompaction means (HSP1), a first chamber and piston compactor (VHP2) and a second compaction chamber and piston (HHP3), wherein the
- the precompaction means is a screw conveyor (HSP1)
- the first and second compaction chambers having each a lateral inlet opening for the precompacted waste,
- screw conveyor and first and second compactions chambers being arranged mutually at substantially right angles.

## Patentansprüche

1. Eine Methode für die Beseitigung des Stadtabfalls, die sich zur Volumenreduktion durch Abfallkompression in geeignete Blöcke, die in Sanitärmüllgruben gestapelt werden eignet, wobei die durchsickernde Flüssigkeit (Leachate) durch die Abfallstoffe in die Müllgrube (Landfill) filtriert wird. Die Methode wird dadurch gekennzeichnet, daß
• die Blöcke nach der Kompression verpackt werden und
• Lochröhre in die verpackten Blöcke eingeführt werden, um Abzugsdurchgänge für das Biogas und die durchsickernde Flüssigkeit (Leachate) zu verschaffen.

2. Die Methode des Anspruchs 1 wird dadurch gekennzeichnet, daß sich das Verhältnis des Müllvolumens durch die Kompression von 7:1 bis 9:1 sinkt, wobei die Kompression stufenweise gleichmäßig abläuft.

3. Die Methode der Ansprüche 1 und 2 wird dadurch gekennzeichnet, daß wiederverwertbares Material an der Quelle und vor der Kompression aussortiert wird.

4. Die Methode jedes beliebigen der o.g. Ansprüche wird dadurch gekennzeichnet, daß die erste Kompressionsstufe durch einen Schraubenförderer erreicht wird, auf der zwei Kompressionsstufen in hydraulischen Kolbenpressen folgen, um rechteckige Blöcke mit vorzüglichen Dimensionen 1,0 m x 0,5 m mit Dichte 1400 Kg/m³ herzustellen.

5. Die Methode jedes beliebigen der o.g. Ansprüche wird dadurch gekennzeichnet, daß das Biogas aus der Müllgrube durch ein Rohrleitungssystem abgelassen wird, das um die aus den aufgestapelten Abfallblöcken entstehende Zellkonstruktion aufgestellt worden ist.

6. Der Apparat für die Produktion von Stadtmüllballen, die mehrfache Kompressionsstufen einschließt (HSP₁, VHP₂, HHP₃) wird durch die Vorsorge für kleine Löcher in der Verpackungsdecke der Ballen gekennzeichnet, die zur Einfügung der Lochröhre dienen.

7. Der Apparat, nach Anspruch 6, wird außerdem von einer Vorkompressionsmöglichkeit (HSP₁), einem ersten Kammer und einem Kolbenkompressor (VHP₂), sowie von einem Kolben (HHP₃) gekennzeichnet, wobei
• die Vorkompressionsanordnung einem Schraubenförderer (HSP1) entspricht
• die ersten und zweiten Kompressionskammern jeweils einen Seiteneinlaß für den Vorkomprimierten Abfall haben und
• der Schraubenförderer und die ersten und zweiten Kompressionskammern gegenseitig im rechten Winkel angeordnet werden.

## Revendications

1. Un procédé d'évacuation des déchets municipaux, prévoyant la réduction de leur volume par compactage en blocs appropriés qui sont empilés dans des décharges sanitaires. Ce procédé permet l'écoulement des liquides effluents à travers les déchets déposés dans les décharges. Il présente les caractéristiques suivantes :
- les blocs sont conditionnés après compactage
- des tubes perforés sont introduits dans les blocs afin de ménager des canaux d'évacuation des gaz organiques et des liquides effluents.

2. Le procédé du point 1 est caractérisé par le fait que le compactage réduit le volume des déchets dans un rapport de 7 pour 1 à 9 pour 1, en plusieurs niveaux de compression.

3. Le procédé des points 1 ou 2 est caractérisé par le fait que les déchets recyclables sont triés sur place (à la source), avant compactage.

4. Le procédé de tout point précédent est caractérisé par le fait qu'un premier niveau de pré-compactage est effectué par une vis de transport, suivi de deux niveaux de compactage en presses à piston hydraulique produisant des blocs parallélépipèdes aux dimensions, de préférence, de 1.0 m x 0.5 m x 0.5 m et d'une densité de 1400 kg/m³.

5. Le procédé de tout point précédent est caractérisé par le fait que les gaz organiques sont évacués de la décharge à l'aide de canalisations installées autour des structures cellulaires formées par l'empilement des blocs de déchets.

6. Dispositif pour la production de balles de déchets municipaux, comprenant un appareillage pour compactage à niveaux multiples (HSP₁, VHP₂, HHP₃) caractérisé par des moyens permettant de perforer l'emballage des balles afin d'y insérer des drains (tubes perforés).

7. Dispositif, selon le point 6, caractérisé par un appareillage de pré-compactage (HSP₁), d'une première chambre de compactage munie d'une presse à piston (VHP₂) et d'une seconde chambre de compactage munie d'une presse à piston (HHP₃). Plus précisément :
• l'appareillage de pré-compactage consiste en une vis de transport (HSP₁)
• la première et la seconde chambre de compactage comportent chacune une ouverture latérale pour l'admission des déchets pré-compactés
• la vis de transport, la première et la seconde chambre de compactage sont disposées à angle droit.
